# EUROPEAN PATENT APPLICATION

(11) **EP 4 365 245 A1**
(43) Date of publication of application: **08.05.2024**
(21) Application number: 22833175.7
(22) Date of filing: 28.06.2022
(51) Int. Cl.: C09D 5/02, C09D 5/10, C09D 1/00

(54) **RUST PREVENTIVE COATING COMPOSITION**

(30) Priority: 30.06.2021 JP 2021109230
(71) Applicant: Chugoku Marine Paints, Ltd., Hiroshima 739-0652 (JP)
(72) Inventor: INAGAKI Taichi, Otake-shi, Hiroshima 739-0652 (JP)
(74) Representative: Hoffmann Eitle
(86) International application number: PCT/JP2022/025809
(87) International publication number: WO 2023/277029

(57) **Abstract**

Provided is an anti-rust coating composition containing (A1) silica nanoparticles, (B) at least one zinc-based powder selected from zinc powder and zinc alloy powder, (C) an aqueous titanium chelate compound, and water.

## Description

### Technical Field

The present disclosure relates to an anti-rust coating composition.

### Background Art

Conventionally, a primary anti-rust coating composition (hereinafter, the "coating composition" is also simply referred to as "coating material") is applied to the surface of a steel material in order to prevent rusting during construction of a large steel structure. As such a primary anti-rust coating material, an organic primary anti-rust coating material (e.g., a wash primer, a non-zinc epoxy primer, an epoxy zinc-rich primer) and an inorganic zinc primary anti-rust coating material containing a siloxane-based binder and zinc powder are known. Among these primary anti-rust coating materials, inorganic zinc primary anti-rust coating materials excellent in weldability are most widely used.

However, the inorganic zinc primary anti-rust coating material containing a siloxane-based binder and zinc powder contains a large amount of volatile organic solvent. In recent years, in many countries, reduction of environmental load is required, and a primary anti-rust coating material that emits no or little volatile organic solvent has been sought. Thus, a method using water instead of the volatile organic solvent (water-based method) has been investigated. Examples of such a water-based inorganic zinc coating composition (hereinafter also referred to as "water-based inorganic zinc anti-rust coating composition") include those described in Patent Literatures 1 to 3.

### Citation List

### Patent Literature

Patent Literature 1: JP 2002-053769 A
Patent Literature 2: JP 2014-515771 A
Patent Literature 3: WO 2017/129784 A

### Summary of Invention

### Technical Problem

The present inventors have found that when an inorganic zinc coating film is formed on a steel material by using a conventional water-based inorganic zinc coating composition in order to impart water resistance (red rust resistance) to the steel material, white rust tends to be generated in the coating film itself. As described above, in the case of using the conventional water-based inorganic zinc anti-rust coating composition, it is difficult to form a coating film excellent in both water resistance and white rust resistance, and the water resistance and the white rust resistance have a so-called trade-off relationship.

A problem solved by the present disclosure is to provide a water-based inorganic zinc anti-rust coating composition capable of forming an inorganic zinc coating film excellent in water resistance and white rust resistance.

### Solution to Problem

The present inventors have found that the above problem can be solved by an anti-rust coating composition having the following components. Specifically, an anti-rust coating composition of the present disclosure contains (A1) silica nanoparticles, (B) at least one zinc-based powder selected from zinc powder and zinc alloy powder, (C) an aqueous titanium chelate compound, and water.

### Advantageous Effects of Invention

The present disclosure makes it possible to provide a water-based inorganic zinc anti-rust coating composition capable of forming an inorganic zinc coating film excellent in water resistance and white rust resistance.

### Description of Embodiments

In the present disclosure, the numerical range "n1 to n2" means n1 or more and n2 or less. Here, n1 and n2 are arbitrary numbers satisfying n1 < n2.

Hereinafter, the anti-rust coating composition of the present disclosure, for instance, will be described in detail.

### [Anti-rust coating composition]

An anti-rust coating composition of the present disclosure (hereinafter, sometimes simply referred to as the "composition") contains (A1) silica nanoparticles, (B) at least one zinc-based powder selected from zinc powder and zinc alloy powder, (C) an aqueous titanium chelate compound, and water.

### <Binder such as (A1) silica nanoparticles)>

The composition of the present disclosure contains silica nanoparticles (A1). The silica nanoparticles (A1) in the composition can function as a binder for forming a coating film. Use of the silica nanoparticles (A1) can improve, for example, the sacrificial anticorrosive action of the zinc-based powder (B) in an anti-rust coating film formed from the above composition.

The silica nanoparticles (A1) are not particularly limited as long as the average particle size is nano-sized (1000 nm or less). The average particle size of the silica nanoparticles (A1) is preferably from 2 to 500 nm, more preferably from 4 to 400 nm, and still more preferably from 10 to 300 nm. In the present disclosure, the average particle size of silica nanoparticles is a value converted from a specific surface area value measured by a BET adsorption method (according to JIS Z8830:2013), and is an average primary particle size. Specifically, the specific surface area of the particles is measured by the BET adsorption method, and the average particle size is calculated based on the following formula: average particle size (nm) = 6,000/(Specific surface area (m²/g) × True density (g/cm³)).

Examples of the silica nanoparticles (A1) include amorphous aqueous silica nanoparticles. The aqueous silica nanoparticles are particles that can be dispersed in an aqueous medium composed of a liquid containing water as a main component, and are particles derived from an aqueous silica sol. The main component refers to a component having a content ratio of more than 50 mass%.

The composition may contain one kind or two or more kinds of the silica nanoparticles (A1).

The composition preferably further contains (A2) at least one component (hereinafter, also referred to as "alkoxysilane-based component (A2)") selected from an alkoxysilane, a hydrolysate of an alkoxysilane, and a hydrolysis condensate of an alkoxysilane. Examples of the hydrolysis condensate include a dimer, a trimer, a tetrameric or higher siloxane oligomer, and a siloxane polymer. The alkoxysilane-based component (A2) in the composition can function as a binder for forming a coating film.

Examples of the alkoxysilane-based component (A2) include tetraalkoxysilane, alkylalkoxysilane, phenylalkoxysilane, mercaptoalkylalkoxysilane, aminoalkylalkoxysilane, ureidoalkylalkoxysilane, thiocyanatoalkylalkoxysilane, carboxyalkylalkoxysilane, glycidyloxyalkylalkoxysilane, bis(trimethoxysilylpropyl)amine, and bis(alkoxysilylalkyl)amine, a hydrolysate thereof, and a hydrolysis condensate thereof. The number of carbon atoms of the alkoxy group in the alkoxysilane is preferably 5 or less and more preferably 3 or less.

Examples of the tetraalkoxysilane include tetramethoxysilane, tetraethoxysilane, tetra n-propoxysilane, tetraisopropoxysilane, tetra n-butoxysilane, and tetraisobutoxysilane.

Examples of the alkylalkoxysilane include C₁ to C₁₆ alkyl alkoxysilane, and more preferably C₁ to C₁₆ alkyl trialkoxysilane. Preferred examples include methyltrimethoxysilane, methyltriethoxysilane, methyltri n-propoxysilane, ethyltrimethoxysilane, ethyltriethoxysilane, n-propyltrimethoxysilane (PTMO), n-propyltriethoxysilane (PTEO), isobutyltrimethoxysilane (IBTMO), isobutyltriethoxysilane (IBTEO), octyltrimethoxysilane (OCTMO), and octyltriethoxysilane (OCTEO).

Examples of the phenylalkoxysilane include phenyltrialkoxysilane. Preferred examples include phenyltrimethoxysilane and phenyltriethoxysilane.

Examples of the mercaptoalkylalkoxysilane include 3-mercaptopropyltrimethoxysilane (MTMO) and 3-mercaptopropyltriethoxysilane (MTEO).

Examples of the aminoalkylalkoxysilane include 3-aminopropyltrimethoxysilane (AMMO), 3-aminopropyltriethoxysilane (AMEO), N-(2-aminoethyl)-3-aminopropyltrimethoxysilane (DAMO), N-(2-aminoethyl)-3-aminopropyltriethoxysilane, N,N'-diaminoethyl-3-aminopropyltrimethoxysilane (TriAMO), and N,N'-diaminoethyl-3-aminopropyltriethoxysilane.

Examples of the ureidoalkylalkoxysilane include 3-ureidopropyltrimethoxysilane and 3-ureidopropyltriethoxysilane.

Examples of the thiocyanatoalkylalkoxysilane include 3-thiocyanatopropyltrimethoxysilane and 3-thiocyanatopropyltrimethoxysilane.

Examples of the carboxyalkylalkoxysilane include 3-carboxypropyltrimethoxysilane and 3-carboxypropyltriethoxysilane.

Examples of the glycidyloxyalkylalkoxysilane include 3-glycidyloxypropyltrimethoxysilane and 3-glycidyloxypropyltriethoxysilane.

Examples of the bis(alkoxysilylalkyl)amine include bis(trimethoxysilylpropyl)amine and bis(triethoxysilylpropyl)amine.

The composition may contain one kind or two or more kinds of the alkoxysilane-based component (A2).

The composition may contain at least one selected from a crosslinking agent, a curing catalyst, and an additive in order to make the film formability by the silica nanoparticles (A1) uniform. Examples of the crosslinking agent include propyl zirconate, butyl titanate, and titanium acetylacetonate. One kind of the crosslinking agent may be used, or two or more kinds thereof may be used. Examples of the curing catalyst include an organic acid (e.g., formic acid, acetic acid, propionic acid, maleic acid); an inorganic acid (e.g., hydrochloric acid, nitric acid, sulfuric acid, phosphoric acid); and sodium hydroxide, potassium hydroxide, N,N-dimethylethanolamine, and tetrakis(triethanolamine)zirconate. One kind of the curing catalyst may be used, or two or more kinds thereof may be used. Details of the additive will be described later.

The composition preferably contains an inorganic/organic hybrid binder containing the silica nanoparticles (A1) and the alkoxysilane-based component (A2), and further containing a crosslinking agent and/or a curing catalyst.

When preparing the composition, it is possible to use a water-based binder containing a binder and water, the binder containing the silica nanoparticles (A1) and, if necessary, the alkoxysilane-based component (A2). Examples of a commercially available product as such a water-based binder include "Dynasylan SIVO series" (manufactured by Evonik Japan Co., Ltd.) as those containing the silica nanoparticles (A1), the alkoxysilane-based component (A2), and water. Examples of the material containing the silica nanoparticles (A1) and water include "Snowtex series" (manufactured by Nissan Chemical Corporation), which is an aqueous silica sol. In particular, from the viewpoint of being able to be cured at room temperature, being able to form an anti-rust coating film having a film thickness of micron order or more, and exhibiting excellent performance, preferred is an inorganic/organic hybrid water-based binder containing the silica nanoparticles (A1), the alkoxysilane-based component (A2), water, and a crosslinking agent and/or a curing catalyst, such as "Dynasylan SIVO 140" (SiO₂ content ratio: 14.25 mass%; solid content concentration: 22.5 mass%; pH 3.8).

The water-based binder may be prepared by adding another aqueous silica sol to a commercially available inorganic/organic hybrid water-based binder (e.g., Dynasylan SIVO 140). In this way, by relatively increasing the content ratio of SiO₂ in the solid content of the water-based binder, the zinc-based powder (B) can effectively exhibit the sacrificial anticorrosive action, thereby capable of improving the anti-rust properties of a single film when the film is top-coated with, for instance, heavy duty coating material. As the inorganic/organic hybrid water-based binder, an acidic, neutral, or alkaline water-based binder can be used, and an acidic water-based binder is preferable. As the acidic inorganic/organic hybrid water-based binder, pH 2 to 6 is preferable, and pH 3 to 5 is particularly preferable. In the present disclosure, the pH is measured at 20°C by using a pH meter.

As the aqueous silica sol that may be added to the inorganic/organic hybrid water-based binder, an acidic, neutral, or alkaline silica sol can be used. When the inorganic/organic hybrid water-based binder is acidic (e.g., in the case of "Dynasylan SIVO 140"), the aqueous silica sol optionally added is preferably an acidic silica sol from the viewpoint of storage stability after mixing. As the acidic silica sol, pH 2 to 6 is preferable, and pH 3 to 5 is particularly preferable.

The aqueous silica sol optionally added may contain, together with the amorphous aqueous silica nanoparticles, another sol-gel forming aqueous element oxide, for example, at least one oxide selected from aluminum oxide, silicon/aluminum oxide, titanium oxide, zirconium oxide, and zinc oxide. Among them, silicon/aluminum oxide is preferably contained. The average particle size of the silica nanoparticles contained in the aqueous silica sol optionally added is preferably from 2 to 500 nm, more preferably from 4 to 400 nm, still more preferably from 10 to 200 nm, and particularly preferably from 17 to 150 nm. Note that it may be allowed to use both an aqueous silica sol containing silica nanoparticles having an average particle size of 17 nm or more and 150 nm or less and an aqueous silica sol containing silica nanoparticles having an average particle size of 2 nm or more and less than 17 nm. The silica nanoparticles having an average particle size of 17 nm or more and 150 nm or less can increase the stability of the composition; and the silica nanoparticles having an average particle size of 2 nm or more and less than 17 nm can moderately increase the viscosity of the composition and improve the anti-settling property.

Examples of such a commercially available aqueous silica sol product include "Snowtex O", "Snowtex OL", and "Snowtex OYL", each of which is an acidic silica sol in which the surface of the dispersoid is anionic, and "Snowtex AK", "Snowtex AK-L", and "Snowtex AK-YL" (hereinabove, manufactured by Nissan Chemical Corporation), each of which is an acidic silica sol in which the surface of the dispersoid is cationic. From the viewpoint of the storage stability of the composition, a cationic acidic silica sol is preferable.

The SiO₂ content ratio is preferably from 0.5 to 30 mass%, more preferably from 1 to 20 mass%, and still more preferably from 2 to 15 mass% in the solid content of the composition or in the anti-rust coating film formed from the composition. When the SiO₂ content ratio is within the above range, it is preferable from the viewpoint of anti-rust properties. The SiO₂ content ratio in the solid content of the composition and the SiO₂ content ratio in the anti-rust coating film mean the total content ratio of the SiO₂ component derived from the silica nanoparticles (A1) and the SiO₂ component derived from the alkoxysilane-based component (A2). The SiO₂ component derived from the silica nanoparticles (A1) includes an SiO₂ component derived from an aqueous silica sol optionally added. The amount of the SiO₂ component can be measured by the method described in WO 2012/130544.

The solid content of the composition refers to a component obtained by removing a volatile component such as water or an organic solvent from the composition, and refers to a component remaining as a coating film when the composition is cured.

The content mass ratio of the silica nanoparticles (A1) to the alkoxysilane-based component (A2) (silica nanoparticles (A1)/alkoxysilane-based component (A2)) in the composition is preferably from 0.1 to 12.0 and more preferably from 0.5 to 8.0. The silica nanoparticles (A1) include silica nanoparticles contained in an aqueous silica sol optionally added.

### <Zinc-based powder (B)>

The zinc-based powder (B) is at least one selected from zinc powder and zinc alloy powder. The zinc-based powder (B) acts as an anti-rust pigment that prevents rusting of a steel material.

Examples of the zinc alloy powder include powder of alloy of zinc and at least one selected from aluminum, magnesium, and tin. Preferable examples thereof include a zinc-aluminum alloy and a zinc-tin alloy.

Examples of the shape of particles constituting the zinc-based powder (B) include various shapes such as a spherical shape and a flaky shape. Examples of a commercially available zinc powder product having a spherical particle shape include "F-2000" (manufactured by Honjo Chemical Corporation). Examples of a commercially available zinc powder product having a flaky particle shape include "STANDART Zinc flake GTT" and "STANDART Zinc flake G" (manufactured by ECKART GmbH). Examples of a commercially available zinc alloy powder product having a flaky particle shape include "STAPA4 ZNAL7", which is an alloy of zinc and aluminum, and "STAPA4 ZNSN30" (manufactured by ECKART GmbH), which is an alloy of zinc and tin.

As the zinc-based powder (B), one or both of zinc powder and zinc alloy powder can be used, and one kind of each of the zinc powder or the zinc alloy powder may be used, or two or more kinds thereof may be used.

The composition may contain one kind or two or more kinds of the zinc-based powder (B).

The content ratio of the zinc-based powder (B) is preferably 80 mass% or less, more preferably from 40 to 70 mass%, and still more preferably from 45 to 60 mass% in the solid content of the composition or in the anti-rust coating film formed from the composition.

### <Aqueous titanium chelate compound (C)>

The composition of the present disclosure contains an aqueous titanium chelate compound (C).

The aqueous titanium chelate compound refers to a titanium chelate compound that can be mixed with or dissolved in water without causing, for instance, gelation, precipitation, or cloudiness when added to water so that the content ratio of the chelate compound is 1 mass% at a temperature of 25°C. It is preferable that the aqueous titanium chelate compound can be mixed with or dissolved in water at a temperature of 25°C in an amount of 30 mass% without causing, for instance, gelation, precipitation, or cloudiness.

In the prior art, as described above, the water resistance and the white rust resistance are in a so-called trade-off relationship, and for example, when the water resistance is improved, it is considered that the white rust resistance is usually deteriorated. White rust is a component (e.g., a mixture of, for instance, zinc oxide, zinc hydroxide, zinc carbonate) that can be generated on the surface of a coating film by reaction of zinc powder in the coating film with water, oxygen, or carbon dioxide when a steel material coated with an inorganic zinc coating composition is exposed outdoors. An anti-rust coating film may be formed on a steel material by using an anti-rust coating composition containing the aqueous titanium chelate compound (C) together with the silica nanoparticles (A1) and the zinc-based powder (B). This can impart, although the reason is unclear, excellent water resistance (red rust resistance) to the steel material, and suppress generation of white rust in the anti-rust coating film. Therefore, it can be said that the effect of the present disclosure that can achieve both water resistance and white rust resistance is an advantageous effect.

Meanwhile, when white rust is generated in a primary anti-rust coating film, the formability or adhesiveness of a topcoat coating film on the primary anti-rust coating film may be deteriorated. Therefore, in this case, a step of removing white rust on the coating film surface may be required. The anti-rust coating composition of the present disclosure can suppress generation of white rust in the anti-rust coating film, and thus can also improve the formability or adhesiveness of a topcoat coating film on the primary anti-rust coating film.

Examples of the aqueous titanium chelate compound (C) include an organotitanium compound represented by formula: Ti(X)₄, and an oligomer thereof. Each X independently represents a hydroxy group, an alkoxy group, or a chelating substituent, provided that at least one X represents a chelating substituent. At least one X is preferably a hydroxy group or an alkoxy group. For example, it is preferable that two X groups are hydroxy groups or alkoxy groups and two X groups are chelating substituents.

Examples of the alkoxy group include a methoxy group; an ethoxy group; a propoxy group (e.g., an n-propoxy or isopropoxy group); and a butoxy group (e.g., an n-butoxy, isobutoxy, or tert-butoxy group). The number of carbon atoms in the alkoxy group is preferably 6 or less and more preferably 4 or less.

The chelating substituent is a group derived from an organic compound having chelating ability. Examples of the organic compound having chelating ability include an alkanolamine, hydroxycarboxylic acid, and a salt of hydroxycarboxylic acid. The chelating substituent is, for example, an alkanolamine-derived ligand, a hydroxycarboxylic acid-derived ligand, or a hydroxycarboxylic acid salt-derived ligand.

Among the aqueous titanium chelate compounds (C), the organotitanium compound having an alkanolamine-derived ligand as a chelating substituent may be used to form an anti-rust coating film further excellent in white rust resistance although the reason is unclear. Among the aqueous titanium chelate compounds (C), the organotitanium compound having a hydroxycarboxylic acid salt-derived ligand as a chelating substituent may be used to form an anti-rust coating film further excellent in salt spray anticorrosion properties although the reason is unclear.

The alkanolamine is an amine compound having a hydroxy group on an alkane skeleton. Examples of the alkanolamine include an alkanolamine containing 12 or less carbon atoms, preferably 4 to 12 carbon atoms, and more preferably 6 to 12 carbon atoms. Specific examples of the alkanolamine include triethanolamine, diethanolamine, monoethanolamine, N-methyldiethanolamine, N-methyldiisopropanolamine, triisopropanolamine, and 2-(2-aminoethylamino)ethanol. Preferred is triethanolamine.

The hydroxycarboxylic acid is a compound having a carboxy group and a hydroxy group. Examples of the hydroxycarboxylic acid include a hydroxycarboxylic acid containing 7 or less carbon atoms and preferably 2 to 4 carbon atoms. Specific examples of the hydroxycarboxylic acid include glycolic acid, lactic acid, hydroxybutyric acid, glyceric acid, malic acid, and tartaric acid. Preferred is lactic acid. Examples of the salt of hydroxycarboxylic acid include an ammonium salt of hydroxycarboxylic acid. Preferred is ammonium lactate.

Specific examples of the chelating substituent include a ligand derived from triethanolamine, diethanolamine, lactic acid, or ammonium lactate. From the viewpoint of further improving white rust resistance, a ligand derived from triethanolamine or diethanolamine is preferable, and from the viewpoint of improving salt spray anticorrosion properties, a ligand derived from ammonium lactate is preferable.

Examples of the aqueous titanium chelate compound (C) include
titanium lactate (e.g., dihydroxytitanium bis(lactate)); ammonium titanium lactate (e.g., dihydroxytitanium bis(ammonium lactate), dipropoxytitanium bis (ammonium lactate));
titanium triethanolaminate (e.g., dipropoxytitanium bis(triethanolaminate), diisopropoxytitanium bis(triethanolaminate), dibutoxytitanium bis(triethanolaminate), propoxytitanium (triethanolaminate)); titanium diethanolaminate (e.g., dipropoxytitanium bis(diethanolaminate), dibutoxytitanium bis(diethanolaminate)); titanium aminoethylaminoethanolate (e.g., (C₃H₇O)Ti(OC₂H₄NHC₂H₄NH₂)₃);
a hydrolysate of the above exemplified titanium chelate; and
a titanium oligomer obtained by condensing the above exemplified titanium chelate by hydrolysis.

The composition may contain one kind or two or more kinds of the aqueous titanium chelate compound (C).

The content of the aqueous titanium chelate compound (C) is preferably 0.1 to 4.5 parts by mass, more preferably 0.2 to 3.0 parts by mass, and still more preferably 0.3 to 2.0 parts by mass based on 100 parts by mass of the zinc-based powder (B) in terms of TiO₂. When the content of the aqueous titanium chelate compound (C) is equal to or less than the upper limit, for example, an increase in viscosity of the coating composition can be suppressed, and a coating composition excellent in coatability is thus obtained. In addition, when the content of the aqueous titanium chelate compound (C) is equal to or less than the upper limit, excellent effects on white rust resistance and water resistance are obtained.

The content of the aqueous titanium chelate compound (C) is preferably 1 to 45 parts by mass, more preferably 5 to 45 parts by mass, and still more preferably 10 to 45 parts by mass based on 100 parts by mass of the binder component excluding SiO₂ in terms of TiO₂. When the content of the aqueous titanium chelate compound (C) is equal to or less than the upper limit, for example, an anti-rust coating film further excellent in water resistance can be formed. The binder component excluding SiO₂ is, for example, a component other than the component capable of forming SiO₂ in the alkoxysilane-based component (A2), the crosslinking agent, or the curing catalyst described above.

### <Aluminum phosphate-based component (D)>

The composition of the present disclosure may further contain an aluminum phosphate-based component (D). The aluminum phosphate-based component (D) not only acts as, for example, an anti-rust pigment that prevents rusting of a steel material, but also is effective in improving salt spray anticorrosion properties. Examples of the aluminum phosphate-based component (D) include an aluminum phosphate-based compound, and an aluminum phosphate-based pigment obtained by treating an aluminum phosphate-based compound with a treating agent.

Examples of the aluminum phosphate-based compound include aluminum pyrophosphate, aluminum dihydrogen tripolyphosphate, aluminum metaphosphate, aluminum orthophosphate, and aluminum phosphite. Among them, condensed aluminum phosphates (e.g., aluminum pyrophosphate, aluminum dihydrogen tripolyphosphate, aluminum metaphosphate) are preferable, and aluminum dihydrogen tripolyphosphate is more preferable.

Examples of the treatment include a surface treatment, a denaturation treatment, and a mixing treatment. Preferred is an aluminum phosphate-based pigment obtained by treating condensed aluminum phosphate (e.g., aluminum pyrophosphate, aluminum dihydrogen tripolyphosphate, aluminum metaphosphate) as described above.

The above treatment can be performed, for example, to adjust the pH of the aluminum phosphate-based compound or to adjust the amount of phosphate ions eluted. Examples of the treating agent used in the above treatment include a pigment containing at least one selected from Si, Zn, Mg, and Ca among the conductive pigment (E) or the pigment (F) described later, and molybdic acid.

As the aluminum phosphate-based pigment, a pigment obtained by treating condensed aluminum phosphate as described above is preferable, and a pigment obtained by treating aluminum dihydrogen tripolyphosphate as described above is more preferable. From the viewpoint of corrosion resistance, a pigment obtained by treating condensed aluminum phosphate with molybdic acid is more preferable, and a pigment obtained by treating aluminum dihydrogen tripolyphosphate with molybdic acid is still more preferable.

Examples of a commercially available aluminum phosphate-based pigment include: "K-WHITE # 84" obtained by surface-treating aluminum dihydrogen tripolyphosphate with a treating agent containing Si and Zn (manufactured by TAYCA Co., Ltd.), "K-WHITE CZ610" obtained by surface-treating aluminum dihydrogen tripolyphosphate with a treating agent containing Ca and Zn (manufactured by TAYCA Co., Ltd.), "K-WHITE G105" obtained by surface-treating aluminum dihydrogen tripolyphosphate with a treating agent containing Mg (manufactured by TAYCA Co., Ltd.), "LF Bowsei PM-303W" obtained by modifying aluminum dihydrogen tripolyphosphate with a treating agent containing molybdic acid (manufactured by KIKUCHI COLOR & CHEMICALS CORPORATION).

The composition may contain one kind or two or more kinds of the aluminum phosphate-based component (D).

The content ratio of the aluminum phosphate-based component (D) in the case of using the aluminum phosphate-based component (D) is preferably 0.5 to 70 mass%, more preferably 1 to 50 mass%, and still more preferably 2 to 40 mass% in the solid content of the composition or in the anti-rust coating film formed from the composition. When the content ratio of the aluminum phosphate-based component (D) is within the above range, for example, an anti-rust coating film further excellent in anti-rust properties can be formed.

### <Conductive pigment (E)>

The composition of the present disclosure may further contain a conductive pigment (E).

When the conductive pigment (E) is used in combination with, for example, the zinc-based powder (B) and the aluminum phosphate-based component (D), the sacrificial anticorrosive action of the zinc-based powder (B) can be improved, and the anti-rust properties can thus be improved.

Examples of the conductive pigment (E) include zinc oxide, metal powder or metal alloy powder other than the zinc-based powder (B), molybdenum and a molybdenum compound described later, and carbon powder. Among them, zinc oxide is preferable from the viewpoint of being inexpensive and highly conductive.

Examples of a commercially available zinc oxide product include "Zinc Oxide grade #1" (manufactured by SAKAI CHEMICAL INDUSTRY CO., LTD.), and "Zinc Oxide grade #3" (manufactured by HAKUSUI TECH CO., LTD.).

Examples of the metal powder or metal alloy powder other than the zinc-based powder (B) include Fe-Si powder, Fe-Mn powder, Fe-Cr powder, magnetic iron powder, and iron phosphide. Examples of commercially available metal powder or metal alloy powder include "Ferrosilicon" (manufactured by KINSEI MATEC CO., LTD.), "Ferromanganese" (manufactured by KINSEI MATEC CO., LTD.), "Ferrochromium" (manufactured by KINSEI MATEC CO., LTD.), "Iron sand powder" (manufactured by KINSEI MATEC CO., LTD.), and "Ferrophos 2132" (manufactured by Occidental Chemical Corporation).

Examples of the carbon powder include carbon black used as a coloring pigment. Examples of a commercially available carbon powder product include "Mitsubishi Carbon Black MA-100" (manufactured by Mitsubishi Chemical Corporation).

The composition may contain one kind or two or more kinds of the conductive pigment (E).

The content ratio of the conductive pigment (E) in the case of using the conductive pigment (E) is preferably 0.1 to 50 mass%, more preferably 1 to 40 mass%, and still more preferably 2 to 30 mass% in the solid content of the composition or in the anti-rust coating film formed from the composition. When the content ratio of the conductive pigment (E) in the composition is within the above range, for example, a coating film further excellent in anti-rust properties can be formed.

### <Pigment (F)>

The composition of the present disclosure may further contain a pigment (F).

The pigment (F) is a pigment other than the above-mentioned (B), (D) and (E), and examples thereof include an extender pigment, a coloring pigment and an anti-rust pigment other than the above-mentioned (B), (D) and (E).

The composition may contain one kind or two or more kinds of the pigment (F).

The content ratio of the pigment (F) in the case of using the pigment (F) is preferably 1 to 60 mass%, more preferably 2 to 50 mass%, and still more preferably 3 to 40 mass% in the solid content of the composition or in the anti-rust coating film formed from the composition.

The extender pigment is not particularly limited as long as it is an inorganic pigment used for typical coating materials, and examples thereof include potassium feldspar, sodium feldspar, kaolin, mica, silica, glass powder, talc, barium sulfate, aluminum oxide, zirconium silicate, wollastonite, and diatomaceous earth. The extender pigment may be an inorganic pigment that generates a gas by thermal decomposition. As the extender pigment, potassium feldspar, kaolin, silica, or glass powder is preferable. When kaolin is used, the content ratio thereof is preferably 0.1 to 60 mass%, more preferably 1 to 40 mass%, and still more preferably 5 to 35 mass% in the solid content of the composition or in the anti-rust coating film formed from the composition. As the silica classified as an extender pigment, it is possible to use silica particles having an average particle size of preferably more than 1 um and 10 um or less. The average particle size of such silica particles can be measured with a particle size distribution analyzer using a laser diffraction method.

Examples of a commercially available extender pigment product include: "Ceramic Powder OF-T" (manufactured by KINSEI MATEC CO., LTD.), which is potassium feldspar; "Mica powder 100-mesh" (manufactured by FUKUOKA TALC CO., LTD.); "Satintone W" (manufactured by BASF), which is kaolin; "A-PAX45M" (manufactured by KINSEI MATEC CO., LTD.), which is zirconium silicate; "FC-1 talc" (manufactured by FUKUOKA TALC CO., LTD.); "Silica QZ-SW" (manufactured by GOTO-KOZAN); "Precipitated barium sulfate 100" (manufactured by SAKAI CHEMICAL INDUSTRY CO., LTD.); and "RADIOLITE" (manufactured by Showa Chemical Industry Co., Ltd.), which is diatomaceous earth.

The composition may contain one kind or two or more kinds of the extender pigment.

The glass powder is generally obtained by heating and melting a compound constituting glass at about 1,000 to 1,100°C for a predetermined time, cooling the compound, and then granulating the compound into a powdery state by using a pulverizer. Examples of the compound constituting glass include SiO₂, B₂O₃, Al₂O₃, ZnO, BaO, MgO, CaO, SrO, Bi₂O₃, Li₂O, Na₂O, K₂O, PbO, P₂O₅, In₂O₃, SnO, CuO, Ag₂O, V₂O₅, and TeO₂. PbO can also be used as a compound constituting glass, but it is desirable not to use PbO since it may adversely affect the environment.

Glass powder having a softening point of 400 to 800°C is preferable because the glass powder acts as an antioxidant for the zinc-based powder (B) when the anti-rust coating film formed of the above composition is heated at a high temperature of 400 to 900°C. The softening point of the glass powder is determined by a method of determining the softening point by a temperature when the viscosity coefficient η reaches 10 to the power of 7.6 while using a Littleton viscometer.

Examples of a commercially available glass powder product include "NB122 A" (softening point: 400°C), "AZ739" (softening point: 605°C), and "PFL20" (softening point: 700°C) (manufactured by Central Glass Co., Ltd.).

B₂O₃, which is one of the compounds constituting glass, is a glassy substance having a softening point of about 450°C by itself, and can be used as glass powder. Examples of a commercially available B₂O₃ product include "Boron oxide" (Cica first-class reagent manufactured by KANTO CHEMICAL CO., INC.).

The composition may contain one kind or two or more kinds of the glass powder.

The content ratio of the glass powder in the case of using the glass powder is preferably 0.05 to 26 mass%, more preferably 0.15 to 20 mass%, and still more preferably 0.5 to 15 mass% in the solid content of the composition or in the anti-rust coating film formed from the composition.

The inorganic pigment that generates a gas by thermal decomposition is, for example, an inorganic pigment that generates a gas such as CO₂ or F₂ by thermal decomposition at 500 to 1,500°C. Examples of the inorganic pigment that generates a gas by thermal decomposition include calcium carbonate, magnesium carbonate, strontium carbonate, and calcium fluoride. When a substrate coated with a coating film of the composition containing such an inorganic pigment is welded, in a melt pool at the time of welding, bubbles generated by gases derived from the coating film-forming solid content of the binder containing the silica nanoparticles (A1), and the components (B), (D), (E) and (F) can be removed from the melt pool together with the gas derived from the inorganic pigment.

Examples of a commercially available inorganic pigment that generates a gas by thermal decomposition include "Fluorspar 400-mesh" (manufactured by KINSEI MATEC CO., LTD.), "NS#400" (manufactured by Nitto Funka Kogyo K.K.), "magnesium carbonate" (manufactured by Tomita Pharmaceutical Co., Ltd.), and "strontium carbonate A" (manufactured by Honjo Chemical Corporation).

The composition may contain one kind or two or more kinds of the inorganic pigment.

The coloring pigment other than (B), (D) and (E) described above is at least one selected from an inorganic coloring pigment and an organic coloring pigment. The inorganic coloring pigment is not particularly limited as long as it is an inorganic coloring pigment other than the conductive pigment (E), and examples thereof include: a metal oxide (e.g., titanium oxide, iron oxide); and a copper-chromium-manganese, iron-manganese, iron-chromium, cobalt-titanium-nickel-zinc, or cobalt-chromium-titanium-zinc composite oxide. Examples of the organic coloring pigment include an organic coloring pigment (e.g., phthalocyanine green, phthalocyanine blue).

Examples of a commercially available coloring pigment product include "TITONE R-5N" (manufactured by SAKAI CHEMICAL INDUSTRY CO., LTD.), "red iron oxide No. 404" (manufactured by MORISHITA BENGARA KOGYO CO., LTD.), "Dipyroxide Black # 9510" (manufactured by Dainichiseika Color & Chemicals Mfg. Co., Ltd.), "Heliogen Green L 8690" (manufactured by BASF Japan Ltd.), and "FASTOGEN Blue 5485" (manufactured by DIC Corporation).

The composition may contain one kind or two or more kinds of the coloring pigment.

Examples of the anti-rust pigment other than (B), (D), and (E) described above include molybdenum, a molybdenum compound, a zinc phosphate-based compound, a calcium phosphate-based compound, a magnesium phosphate-based compound, a zinc phosphite-based compound, a calcium phosphite-based compound, a strontium phosphite-based compound, a zinc cyanamide-based compound, and a borate compound.

The molybdenum (metallic molybdenum) and molybdenum compound acts as an antioxidant (what is called white rust inhibitor) of the zinc-based powder (B) for reducing generation of the white rust in the anti-rust coating film to be formed. The composition may contain one or both of molybdenum and a molybdenum compound.

Examples of the molybdenum compound include molybdenum oxide (e.g., molybdenum trioxide), molybdenum sulfide, molybdenum halide, molybdic acid, ammonium molybdate, phosphomolybdic acid, silicomolybdic acid, a metal salt of molybdic acid (e.g., zinc molybdate), an alkali metal salt of molybdic acid, an alkali metal salt of phosphomolybdic acid, an alkali metal salt of silicomolybdic acid, an alkaline earth metal salt of molybdic acid (e.g., calcium molybdate), an alkaline earth metal salt of phosphomolybdic acid, an alkaline earth metal salt of silicomolybdic acid, a manganese salt of molybdic acid, a manganese salt of phosphomolybdic acid, a manganese salt of silicomolybdic acid, a basic nitrogen-containing compound salt of molybdic acid, a basic nitrogen-containing compound salt of phosphomolybdic acid, and a basic nitrogen-containing compound salt of silicomolybdic acid.

The composition may contain one kind or two or more kinds of the molybdenum compound.

When one or both of molybdenum and a molybdenum compound are used, the total content of molybdenum and a molybdenum compound is preferably 0.05 to 5.0 parts by mass, more preferably 0.3 to 3.0 parts by mass, and still more preferably 0.5 to 2.0 parts by mass based on 100 parts by mass of the zinc-based powder (B). When the content is in the above range, the sufficient antioxidant action of the zinc-based powder (B) can be obtained, the decrease in the activity of the zinc-based powder (B) can be prevented, and the anticorrosion properties of the coating film can be maintained.

The composition may contain one kind or two or more kinds of the anti-rust pigment.

### <Additional components>

The composition of the present disclosure may optionally contain, as an additional component, for instance, an additive as long as the purpose and effect of the present disclosure are not impaired.

Examples of the additive include a thixotropic agent, an antifoaming agent, a wetting agent, a surface conditioner, a precipitation inhibitor, an anti-sagging agent, a desiccant, a fluidity adjusting agent, a dispersing agent, an anti-coloring agent, an anti-skinning agent, a plasticizer, and a UV absorber. Specific examples of the coating additive include a polycarboxylic acid-based thixotropic agent, a fatty acid polyamide-based thixotropic agent, a polyethylene oxide-based thixotropic agent, a urethane-binding thixotropic agent, an acrylic polymer-based thixotropic agent, and a modified urea-based thixotropic agent; a modified silicone-based defoamer and a polymer-based defoamer; a modified silicone-based surface conditioner, an acrylic polymer-based surface conditioner, a fluorine-containing polymer-based surface conditioner, and a dialkyl sulfosuccinate-based surface conditioner; and a clay-based precipitation inhibitor (e.g., hectorite, bentonite, smectite).

The composition may contain one kind or two or more kinds of the additive.

### <Water>

The composition of the present disclosure contains water to dissolve or disperse binders such as the silica nanoparticles (A1) and the alkoxysilane-based component (A2). Here, the water may be water used at the time of producing the first agent described later, or may be water added in a preparation process of mixing the above-described water-based binder, the zinc-based powder (B), the aqueous titanium chelate compound (C), the aluminum phosphate-based component (D), the conductive pigment (E), and the pigment (F), and the above-described additional components.

Water is contained in the composition, for example, functions as a solvent or dispersion medium for binders such as the silica nanoparticles (A1) and the alkoxysilane-based component (A2), and has a function of stably holding the binders in the composition. Thus, the viscosity of water-based coating composition can be suitably retained, and workability using, for instance, a spray, a brush, or a roller can be well maintained. From such a viewpoint, the content ratio of water in the composition is preferably 10 to 90 mass%, more preferably 20 to 80 mass%, and still more preferably 30 to 70 mass%.

### <Hydrophilic organic solvent>

The composition of the present disclosure may further contain a hydrophilic organic solvent.

Examples of the hydrophilic organic solvent include acetone, methyl alcohol, n-propyl alcohol, isopropyl alcohol, n-butyl alcohol, isobutyl alcohol, 2-butoxyethanol, 2-ethoxyethanol, 1-methoxy-2-propanol, 1-ethoxy-2-propanol, ethyl alcohol, 2-methoxyethanol, diacetone alcohol, dioxane, ethylene glycol, ethylene glycol diethyl ether, ethylene glycol dimethyl ether, ethylene glycol monoethyl ether, ethylene glycol monopropyl ether, ethylene glycol monobutyl ether, and ethylene glycol monohexyl ether.

The composition may contain one kind or two or more kinds of the hydrophilic organic solvent.

A case where the composition contains a hydrophilic organic solvent is preferable from the viewpoints of improving the solubility and dispersibility of the above (B) to (F) in water, improving the wettability of the composition on an object to be coated (substrate), and improving the drying property and curability of a coating film. However, a case where the amount of the hydrophilic organic solvent added is large is not preferable from the viewpoint of environmental regulations of reducing a volatile organic compound (VOC), although the solubility and dispersibility of the above (B) to (F) in water are improved. From such a viewpoint, the content ratio of the hydrophilic organic solvent in the composition is preferably less than 15 mass%, more preferably less than 10 mass%, and still more preferably less than 5 mass%. The content ratio of the organic solvent including the hydrophilic organic solvent in the composition is also preferably less than 15 mass%, more preferably less than 10 mass%, and still more preferably less than 5 mass%.

### <Pigment volume concentration (PVC)>

The composition of the present disclosure has a pigment volume concentration (PVC) of preferably 70% or larger, more preferably 70 to 90%, and still more preferably 75 to 85%. In the present disclosure, the pigment volume concentration (PVC) refers to a concentration where a proportion (volume basis) of the pigment component and solid particles in the additive in the solid content of the composition is expressed as a percentage. PVC = [Total volume of all pigment components + Total volume of solid particles in additive]/[Volume of solid content in coating composition] × 100 (%).

Examples of the "pigment component" include the zinc-based powder (B), the aluminum phosphate-based component (D), the conductive pigment (E), and the pigment (F). Examples of the solid content component of the coating composition other than the pigment component include the silica nanoparticles (A1), the alkoxysilane-based component (A2), and the aqueous titanium chelate compound (C), and solid particles in an additive.

In the calculation of PVC, the volume of each component is calculated from the mass of each component and its true density (hereinafter, also simply referred to as "density").

The volume of the solid content (nonvolatile content) in the composition can be calculated from the mass and density of the solid content in the composition. The mass and the density may be measured values, or may be values calculated from a raw material used when measurement is difficult.

The volume of the pigment component can be calculated from the mass and density of the pigment component used. The mass and the density may be measured values, or may be values calculated from a raw material used when measurement is difficult. For example, the volume can be calculated by separating the pigment component from other components in the nonvolatile content of the composition and measuring the mass and density of the separated pigment component. The same applies to the solid particles in the additive.

### <Use of anti-rust coating composition and others>

The composition of the present disclosure can be preferably used as a primary anti-rust coating composition during the coating of a steel material for a large structure. Examples of the large structure include a ship, a marine structure, a plant, a bridge, and an overland tank. The primary anti-rust coating composition is required to protect a steel material during a construction period from rusting without hindering, for example, cutting and welding in a construction process of a large structure.

For example, the primary anti-rust coating composition is applied to a substrate (e.g., a steel material) to form a primary anti-rust coating film. The substrate to be coated is subjected to, for example, a blasting treatment under a condition corresponding to a rust removal degree of Sa2 1/2 or higher in ISO 8501-1.

A coating material (e.g., an epoxy resin-based coating material, a chlorinated rubber-based coating material, an oil-based coating material, an epoxy ester-based coating material, a polyurethane resin-based coating material, a polysiloxane resin-based coating material, a fluororesinbased coating material, an acrylic resin-based coating material, a vinyl resin-based coating material, and an inorganic dink-based coating material) can be applied on the surface of the anti-rust coating film formed from the above composition to form a topcoat coating film. The anti-rust coating film is also excellent in adhesion to the topcoat coating film.

### [Anti-rust coating composition kit]

An anti-rust coating composition kit (hereinafter, also simply referred to as "kit") of the present disclosure includes a first agent and a second agent. The first agent contains the silica nanoparticles (A1), the aqueous titanium chelate compound (C), and water, and preferably further contains the alkoxysilane-based component (A2). The second agent contains the zinc-based powder (B).

Since the first agent contains the aqueous titanium chelate compound (C), the storage stability thereof is greatly improved although the reason is unclear. Here, the storage stability can be determined, for example, by comparing the water resistance of an anti-rust coating film formed from a coating composition obtained by mixing the second agent with the first agent several days after preparation with the water resistance of an anti-rust coating film formed from a coating composition obtained by mixing the second agent with the first agent after storage for 2 months. That is, the first agent containing the aqueous titanium chelate compound (C) in addition to the silica nanoparticles (A1), the alkoxysilane-based component (A2) as necessary, and water can be used to form an anti-rust coating film excellent in water resistance even after storage for a certain period of time.

At least one selected from the first agent and the second agent, for example, the second agent preferably further contains the aluminum phosphate-based component (D). At least one selected from the first agent and the second agent, for example, the second agent preferably further contains the conductive pigment (E).

At least one selected from the first agent and the second agent, for example, the second agent preferably further contains the pigment (F). The second agent preferably contains the zinc-based powder (B), the aluminum phosphate-based component (D), and the conductive pigment (E), and more preferably further contains the pigment (F).

The first agent is, for example, a water-based binder containing the silica nanoparticles (A1), the alkoxysilane-based component (A2) as necessary, the aqueous titanium chelate compound (C), and water. The content ratio of SiO₂ in the first agent (or water-based binder) is preferably 0.5 to 50 mass%, more preferably 1 to 30 mass%, and still more preferably 2 to 15 mass%. The content ratio of SiO₂ in the solid content of the first agent is preferably 40 to 95 mass% and more preferably 50 to 90 mass%.

Note that from the viewpoint of preventing precipitation of the silica nanoparticles (A1) in the first agent during long-term storage, the average particle size of the silica nanoparticles contained in the aqueous silica sol is preferably 100 nm or less and more preferably 50 nm or less.

The content ratio of the aqueous titanium chelate compound (C) in the first agent is preferably 0.1 to 1.5 mass% and more preferably 0.2 to 1.2 mass% in terms of TiO₂. Such a configuration makes it possible to further improve the storage stability of the first agent.

The content mass ratio of the silica nanoparticles (A1) to the alkoxysilane-based component (A2) (silica nanoparticles (A1)/alkoxysilane-based component (A2)) in the first agent is preferably from 0.1 to 12.0 and more preferably from 0.5 to 8.0. The silica nanoparticles (A1) include silica nanoparticles contained in an aqueous silica sol optionally added.

The content ratio of water in the first agent is preferably 30 to 98 mass%, more preferably 50 to 95 mass%, and still more preferably 70 to 92 mass%.

At least one selected from the first agent and the second agent may contain the above-described additional component(s).

The composition can be easily prepared by mixing the first agent and the second agent constituting the kit. The content ratio of each component in the first agent or the second agent can be appropriately set so that the content ratio of each component when the first agent and the second agent are mixed to prepare the composition falls within the range described in the section of [Anti-rust coating composition].

### [Anti-rust coating film, primary anti-rust coating film, anti-rust substrate, and production method therefor]

An anti-rust substrate of the present disclosure includes a substrate, and an anti-rust coating film and/or a primary anti-rust coating film formed on the substrate.

Here, the anti-rust coating film or the primary anti-rust coating film is formed from the composition of the present disclosure or the kit of the present disclosure.

The average dry film thickness of the anti-rust coating film and/or the primary anti-rust coating film formed from the composition or the kit as measured with an electromagnetic film thickness meter is preferably 30 um or less and more preferably 5 to 25 µm.

The method for producing an anti-rust substrate according to the present disclosure includes the steps of: [1] applying the composition of the present disclosure onto a substrate; and [2] curing the composition applied onto the substrate to form an anti-rust coating film on the substrate.

Examples of the substrate include iron or steel (e.g., iron, steel, alloy iron, carbon steel, mild steel, alloy steel), and specific examples thereof include a steel material (e.g., the above-described steel materials for large structures). If necessary, the substrate is preferably subjected to blasting treatment under conditions corresponding to a rust removal degree of Sa2 1/2 or higher in ISO 8501-1.

Examples of the method of applying the anti-rust coating composition onto a substrate include a method in which the anti-rust coating composition is applied onto the substrate, or the substrate is impregnated in the anti-rust coating composition and then taken out. The method of applying the anti-rust coating composition is not particularly limited, and any conventionally known method such as air spraying or airless spraying can be applied.

As the coating machine, in general, it is possible to primarily use an airless spray or a line coating machine when the coating is typically performed in, for instance, a shipyard or a steel mill. The line coating machine controls the film thickness according to the coating conditions of the line speed, the coating pressure of, for instance, an air spray or airless spray installed inside the coating machine, and the size (diameter) of the spray tip.

For example, the composition is applied onto a substrate and then cured. The curing process is not particularly limited, and any conventionally known curing process can be applied. For example, when the composition applied onto the substrate is left in the air, the water in the composition and the hydrophilic organic solvent optionally contained therein are volatilized to cure the composition. At this time, the coating film may be heated and dried as necessary. Examples of the heating method include a method using a tunnel-type heating system with a combustion gas, a petroleum burner, electric heating wire heating, induction heating, a far infrared heating device, or the like, a direct heating method using a gas or a petroleum burner, or a method using infrared irradiation or an induction heating system.

The present disclosure relates to, for example, the following (1) to (16).
(1) An anti-rust coating composition containing (A1) silica nanoparticles, (B) at least one zinc-based powder selected from zinc powder and zinc alloy powder, (C) an aqueous titanium chelate compound, and water.
(2) The anti-rust coating composition according to (1), wherein the aqueous titanium chelate compound (C) is at least one selected from an organotitanium compound represented by formula: Ti(X)₄, where each X is independently a hydroxy group, an alkoxy group, or a chelating substituent, provided that at least one X is a chelating substituent, and an oligomer thereof.
(3) The anti-rust coating composition according to (2), wherein the aqueous titanium chelate compound (C) is the organotitanium compound in which the chelating substituent is an alkanolamine-derived ligand, a hydroxycarboxylic acid-derived ligand, or a hydroxycarboxylic acid salt-derived ligand.
(4) The anti-rust coating composition according to (2) or (3), wherein the aqueous titanium chelate compound (C) is the organotitanium compound in which the chelating substituent is an alkanolamine-derived ligand.
(5) The anti-rust coating composition according to any one of (1) to (4), wherein a content of the aqueous titanium chelate compound (C) is 0.1 to 4.5 parts by mass based on 100 parts by mass of the zinc-based powder (B) in terms of TiO₂.
(6) The anti-rust coating composition according to any one of (1) to (5), further containing (A2) at least one component selected from an alkoxysilane, a hydrolysate of an alkoxysilane, and a hydrolysis condensate of an alkoxysilane.
(7) The anti-rust coating composition according to any one of (1) to (6), wherein a content ratio of the zinc-based powder (B) is 80 mass% or less in a solid content of the anti-rust coating composition.
(8) The anti-rust coating composition according to any one of (1) to (7), having a pigment volume concentration (PVC) of 70% or more.
(9) The anti-rust coating composition according to any one of (1) to (8), which is a primary anti-rust coating composition.
(10) An anti-rust coating composition kit containing: a first agent; and a second agent, wherein the first agent contains (A1) silica nanoparticles, (C) an aqueous titanium chelate compound, and water, and the second agent contains (B) at least one zinc-based powder selected from zinc powder and zinc alloy powder.
(11) The anti-rust coating composition kit according to (10), wherein the first agent further contains (A2) at least one component selected from an alkoxysilane, a hydrolysate of an alkoxysilane, and a hydrolysis condensate of an alkoxysilane.
(12) An anti-rust coating film formed from the anti-rust coating composition according to any one of (1) to (8) or the anti-rust coating composition kit according to (10) or (11) .
(13) A primary anti-rust coating film formed from the anti-rust coating composition according to (9) or the anti-rust coating composition kit according to (10) or (11).
(14) An anti-rust substrate including: a substrate; and the anti-rust coating film according to (12) formed on the substrate.
(15) An anti-rust substrate including: a substrate; and the primary anti-rust coating film according to (13) formed on the substrate.
(16) A method for producing an anti-rust substrate, the method including the steps of: [1] applying, onto a substrate, the anti-rust coating composition according to any one of (1) to (9) or a mixture obtained by mixing the first agent and the second agent of the anti-rust coating composition kit according to (10) or (11); and [2] curing the anti-rust coating composition or the mixture applied onto the substrate to form an anti-rust coating film on the substrate.

### Examples

Hereinafter, each anti-rust coating composition of the present disclosure will be described in more detail with reference to Examples. The anti-rust coating composition of the present disclosure, however, is not limited to only these Examples.

The components used in Examples or Comparative Examples are as follows.
·Surface conditioner: "TEGO Twin 4000",
   manufactured by Evonik Japan Co., Ltd.
   density: 1.0 g/cm³
·Aqueous titanium chelate: "TYZOR TE",
   manufactured by DOLE KETAL USA,
   triethanolamine titanium chelate,
   solid content concentration: 80 mass%,
   density: 1.06 g/cm³,
   TiO₂ equivalent: 13.69 mass%
·Aqueous titanium chelate: "TYZOR LA",
   manufactured by DOLE KETAL USA,
   ammonium lactate titanium chelate,
   solid content concentration: 50 mass%,
   density: 1.21 g/cm³,
   TiO₂ equivalent: 13.6 mass%
·Aqueous silica sol containing the silica nanoparticles (A1) and water:
   ·"Snowtex AK-YL",
   manufactured by Nissan Chemical Corporation,
   SiO₂ content ratio: 30.5 mass%
   solid content concentration: 31.2 mass%,
   density: 1.22 g/cm³,
   average particle size: 50 to 80 nm, pH 4.2
   ·"Snowtex AK-L",
   manufactured by Nissan Chemical Corporation,
   SiO₂ content ratio: 20.5 mass%
   solid content concentration: 21.2 mass%,
   density: 1.14 g/cm³
   average particle size: 40 to 50 nm, pH 4.2
·Inorganic/organic hybrid water-based binder containing the silica nanoparticles (A1), the alkoxysilane-based component (A2), water, a crosslinking agent, and a curing catalyst:
   "Dynasylan SIVO 140",
   manufactured by Evonik Japan Co., Ltd.
   SiO₂ content ratio: 14.25 mass%,
   solid content concentration: 22.5 mass%,
   density: 1.1 g/cm³, pH 3.8
·Conductive pigment: "Zinc Oxide grade #3",
   manufactured by HAKUSUI TECH CO., LTD.
   density: 5.8 g/cm³, zinc oxide
·Extender pigment: "Satintone W",
   manufactured by BASF,
   density: 2.6 g/cm³, calcined kaolin
·Aluminum phosphate-based component: "LF Bowsei PM-303W",
   manufactured by KIKUCHI COLOR & CHEMICALS CORPORATION,
   density: 3.0 g/cm³,
   aluminum dihydrogen tripolyphosphate (treated with molybdic acid)
·Zinc powder: "F-2000"
   manufactured by Honjo Chemical Corporation,
   density: 7.1 g/cm³

### [Preparation Example] Preparation of first agent and second agent

The deionized water, the surface conditioner, the aqueous titanium chelate compound, the aqueous silica sol, and the inorganic/organic hybrid water-based binder were charged into a container in blending amounts (parts by mass) shown in Tables 1 to 4, and stirred at 25°C for 1 hour to prepare a first agent.

The conductive pigment, the extender pigment, the aluminum phosphate-based component, and the zinc powder were mixed in blending amounts (parts by mass) shown in Tables 1 to 4 to prepare a second agent.

### [Examples 1 to 8, Comparative Examples 1 and 2]

### Preparation of anti-rust coating composition

The first agent and the second agent were added in the proportions (parts by mass) shown in Tables 1 to 4 to a polyethylene container, and subjected to a dispersion treatment with a high-speed disperser for 5 minutes to prepare an anti-rust coating composition.

### [To prepare test plate]

Each anti-rust coating composition obtained in Examples or Comparative Examples was applied onto a structural steel plate (JIS G3101:2015, SS400; dimensions: 150 mm × 70 mm × 2.3 mm; sand-blasted) so as to have a dry film thickness of 15 um. Subsequently, the applied composition was dried in a constant-temperature and constanthumidity chamber at a temperature of 23°C and a relative humidity of 50% for 7 days in accordance with the standard of JIS K5600-1-6:2016 to prepare a test plate having an anti-rust coating film formed on the structural steel plate. The dry film thickness was measured using an electromagnetic film thickness meter "LE-370" (manufactured by Kett Electric Laboratory Co. Ltd.).

### [White rust resistance]

The two test plates were attached together in tap water and put in a polyethylene bag (hereinafter, also referred to as a "PE bag"). About 50 g of tap water was added to the PE bag by using a paper cup, and the PE bag was sealed with a packing tape to obtain a test bag. The obtained test bag was left in a thermostat at 50°C for 7 days, the test plate was then taken out from the test bag, and the surface was sufficiently dried. The state on the mating surface of the test plate (the state of how white rust was generated on the mating surface) was evaluated. Evaluation criteria of white rust are as follows.

AA: No white rust.
BB: Slight white rust is observed.
CC: White rust is observed, but is not significantly broad.
DD: White rust is observed on the entire surface.

### [Water resistance (red rust resistance)]

Each test plate described above was exposed outdoors for 3 days in a state where the coating surface of the test plate was always wet on an apparatus in which a horizontal state was kept and tap water was sprayed. According to the standard of PINPOINT RUSTING in ASTM (American Society for Testing and Materials) standard D-610, the area percentage (%) of red rust generated with respect to the entire surface of the test plate (provided that 1 cm of each of the four corners was excluded from the evaluation target) was visually assessed and graded on a scale of 10 points.

### [Evaluation criteria for rusting state (ASTM D610)]

10: Rusting is not observed, or the area percentage of rusting is 0.01% or less.
9: The area percentage of rusting is more than 0.01% and 0.03% or less.
8: The area percentage of rusting is more than 0.03% and 0.1% or less.
7: The area percentage of rusting is more than 0.1% and 0.3% or less.
6: The area percentage of rusting is more than 0.3% and 1% or less.
5: The area percentage of rusting is more than 1% and 3% or less.
4: The area percentage of rusting is more than 3% and 10% or less.
3: The area percentage of rusting is more than 10% and 16% or less.
2: The area percentage of rusting is more than 16% and 33% or less.
1: The area percentage of rusting is more than 33% and 50% or less.
0: The area percentage of rusting is more than 50% and 100% or less.

### [Storage stability]

The first agent was stored at 23°C for 2 days or 2 months after preparation. Each anti-rust coating composition was prepared in the same manner as described above by using the first agent after storage. The obtained anti-rust coating composition was used to prepare the test plate in the same manner as described above. The obtained test plate was subjected to the above water resistance (red rust resistance) test.

### [Salt spray anticorrosion properties]

Each test plate obtained in the above section [To prepare test plate] was placed in a spray cabinet at a temperature of 35°C ± 2°C in accordance with JIS K5600-7-1:2016. An aqueous sodium chloride solution (concentration: 5%) was continuously sprayed onto the anti-rust coating film of the test plate. The rusting state of the anti-rust coating film after 500, 1600, and 3600 hours from the start of spraying was evaluated in the same manner as in the water resistance (red rust resistance) test according to the standard in ASTM standard D-610. Grade was determined on the scale of 10 points.

### [Table 1]

**Table 1**

| | | | Example 1 | Example 2 | Example 3 | Example 4 | Example 5 | Example 6 | Example 7 | Example 8 | Comparative Example 1 |
|---|---|---|---|---|---|---|---|---|---|---|---|
| First agent | Deionized water | Demineralized Water | 19.90 | 20.81 | 20.34 | 19.25 | 19.08 | 19.25 | 16.06 | 16.11 | 19.94 |
| | Surface conditioner | TEGO Twin 4000 | 0.06 | 0.06 | 0.06 | 0.06 | 0.06 | 0.06 | 0.06 | 0.06 | 0.06 |
| | Triethanolamine titanium chelate | TYZOR TE | 1.00 | 2.00 | 3.00 | 0.00 | 2.00 | 1.10 | 1.34 | 1.66 | 0.00 |
| | Ammonium lactate titanium chelate | TYZOR LA | 0.00 | 0.00 | 0.00 | 3.26 | 0.00 | 0.00 | 0.00 | 0.00 | 0.00 |
| | Aqueous silica sol | Snowtex AK-L | 0.00 | 0.00 | 0.00 | 0.00 | 0.00 | 0.00 | 12.68 | 12.50 | 0.00 |
| | | SnowtexAK-YL | 8.82 | 8.05 | 0.00 | 8.17 | 3.24 | 16.24 | 0.00 | 0.00 | 9.20 |
| | Inorganic/organic hybrid water-based binder | Dynasylan SIVO 140 | 13.23 | 12.08 | 19.60 | 12.26 | 18.63 | 5.71 | 12.86 | 12.67 | 13.80 |
| | | (Subtotal) | 43.00 | 43.00 | 43.00 | 43.00 | 43.00 | 42.36 | 43.00 | 43.00 | 43.00 |
| Second agent | Conductive pigment | Zinc oxide grade #3 | 3.8 | 3.8 | 3.8 | 3.8 | 3.8 | 3.8 | 3.8 | 3.8 | 3.8 |
| | Extender pigment | Calcined kaolin Satintone W | 8.9 | 8.9 | 8.9 | 8.9 | 20.9 | 8.9 | 8.9 | 8.9 | 8.9 |
| | Aluminum phosphate-based component | LF Bowsei PM-303W | 12.0 | 12.0 | 12.0 | 12.0 | 0.0 | 12.0 | 12.0 | 12.0 | 12.0 |
| | Zinc powder | F-2000 | 32.3 | 32.3 | 32.3 | 32.3 | 32.3 | 32.3 | 32.3 | 32.3 | 32.3 |
| | | (Subtotal) | 57.00 | 57.00 | 57.00 | 57.00 | 57.00 | 57.00 | 57.00 | 57.00 | 57.00 |
| [Total] | | | 100.00 | 100.00 | 100.00 | 100.00 | 100.00 | 99.36 | 100.00 | 100.00 | 100.00 |
| Calculated value | PVC | | 81.2 | 82.3 | 82.8 | 81.9 | 82.0 | 80.9 | 81.5 | 81.6 | 80.7 |
| | Metallic zinc content (in coating film) mass% | | 51.3 | 51.6 | 52.2 | 51.4 | 51.7 | 50.8 | 51.4 | 51.4 | 51.2 |
| | Content (in coating material) mass% in terms of TiO₂ | | 0.14 | 0.27 | 0.41 | 0.44 | 0.27 | 0.15 | 0.18 | 0.23 | 0.00 |
| | Content (in first agent) mass% in terms of TiO₂ | | 0.32 | 0.64 | 0.96 | 1.03 | 0.64 | 0.36 | 0.43 | 0.53 | 0.00 |
| | Content parts by mass (based on 100 parts by mass of zinc powder) in terms of TiO₂ | | 0.4 | 0.8 | 1.3 | 1.4 | 0.8 | 0.5 | 0.6 | 0.7 | 0.0 |
| | Content parts by mass (based on 100 parts by mass of binder component excluding SiO₂) in terms of TiO₂ | | 12.5 | 27.5 | 25.4 | 43.8 | 17.8 | 32.0 | 17.3 | 21.7 | 0.0 |
| Evaluation | White rust resistance | | BB | BB | BB | CC | AA | BB | CC | CC | DD |

### [Table 2]

**Table 2**

| | | | Example 1 | Example 2 | Example 3 | Example 4 | Example 7 | Example 8 | Comparative Example 1 | Comparative Example 2 |
|---|---|---|---|---|---|---|---|---|---|---|
| First agent | Deionized water | Demineralized Water | 19.90 | 20.81 | 20.34 | 19.25 | 16.06 | 16.11 | 19.94 | 18.94 |
| | Surface conditioner | TEGO Twin 4000 | 0.06 | 0.06 | 0.06 | 0.06 | 0.06 | 0.06 | 0.06 | 0.06 |
| | Triethanolamine titanium chelate | TYZOR TE | 1.00 | 2.00 | 3.00 | 0.00 | 1.34 | 1.66 | 0.00 | 0.00 |
| | Ammonium lactate titanium chelate | TYZOR LA | 0.00 | 0.00 | 0.00 | 3.26 | 0.00 | 0.00 | 0.00 | 0.00 |
| | Aqueous silica sol | Snowtex AK-L | 0.00 | 0.00 | 0.00 | 0.00 | 12.68 | 12.50 | 0.00 | 0.00 |
| | | Snowtex AK-YL | 8.82 | 8.05 | 0.00 | 8.17 | 0.00 | 0.00 | 9.20 | 0.00 |
| | Inorganic/organic hybrid water-based binder | Dynasylan SIVO 140 | 13.23 | 12.08 | 19.60 | 12.26 | 12.86 | 12.67 | 13.80 | 24.00 |
| | | (Subtotal) | 43.00 | 43.00 | 43.00 | 43.00 | 43.00 | 43.00 | 43.00 | 43.00 |
| Second agent | Conductive pigment | Zinc oxide grade #3 | 3.8 | 3.8 | 3.8 | 3.8 | 3.8 | 3.8 | 3.8 | 3.8 |
| | Extender pigment | Calcined kaolin Satintone W | 8.9 | 8.9 | 8.9 | 8.9 | 8.9 | 8.9 | 8.9 | 8.9 |
| | Aluminum phosphate-based component | LF Bowsei PM-303W | 12.0 | 12.0 | 12.0 | 12.0 | 12.0 | 12.0 | 12.0 | 12.0 |
| | Zinc powder | F-2000 | 32.3 | 32.3 | 32.3 | 32.3 | 32.3 | 32.3 | 32.3 | 32.3 |
| | | (Subtotal) | 57.00 | 57.00 | 57.00 | 57.00 | 57.00 | 57.00 | 57.00 | 57.00 |
| [Total] | | | 100.00 | 100.00 | 100.00 | 100.00 | 100.00 | 100.00 | 100.00 | 100.00 |
| Calculated value | PVC | | 81.2 | 82.3 | 82.8 | 81.9 | 81.5 | 81.6 | 80.7 | 80.4 |
| | Metallic zinc content (in coating film) mass% | | 51.3 | 51.6 | 52.2 | 51.4 | 51.4 | 51.4 | 51.2 | 51.7 |
| | Content (in coating material) mass% in terms of TiO₂ | | 0.14 | 0.27 | 0.41 | 0.44 | 0.18 | 0.23 | 0.00 | 0.00 |
| | Content (in first agent) mass% in terms of TiO₂ | | 0.32 | 0.64 | 0.96 | 1.03 | 0.43 | 0.53 | 0.00 | 0.00 |
| | Content parts by mass (based on 100 parts by mass of zinc powder) in terms of TiO₂ | | 0.4 | 0.8 | 1.3 | 1.4 | 0.6 | 0.7 | 0.0 | 0.0 |
| | Content parts by mass (based on 100 parts by mass of binder component excluding SiO₂) in terms of TiO₂ | | 12.5 | 27.5 | 25.4 | 43.8 | 17.3 | 21.7 | 0.0 | 0.0 |
| Evaluation | Water resistance (After 3 days) | | 8 | 10 | 8 | 8 | 8 | 8 | 7 | 4 |

### [Table 3]

**Table 3**

| | | | Example 1 | Example 2 | Example 3 | Example 4 | Example 8 | Comparative Example 1 |
|---|---|---|---|---|---|---|---|---|
| First agent | Deionized water | Demineralized Water | 19.90 | 20.81 | 20.34 | 19.25 | 16.11 | 19.94 |
| | Surface conditioner | TEGO Twin 4000 | 0.06 | 0.06 | 0.06 | 0.06 | 0.06 | 0.06 |
| | Triethanolamine titanium chelate | TYZOR TE | 1.00 | 2.00 | 3.00 | 0.00 | 1.66 | 0.00 |
| | Ammonium lactate titanium chelate | TYZOR LA | 0.00 | 0.00 | 0.00 | 3.26 | 0.00 | 0.00 |
| | Aqueous silica sol | Snowtex AK-L | 0.00 | 0.00 | 0.00 | 0.00 | 12.50 | 0.00 |
| | | Snowtex AK-YL | 8.82 | 8.05 | 0.00 | 8.17 | 0.00 | 9.20 |
| | Inorganic/organic hybrid water-based binder | Dynasylan SIVO 140 | 13.23 | 12.08 | 19.60 | 12.26 | 12.67 | 13.80 |
| | | (Subtotal) | 43.00 | 43.00 | 43.00 | 43.00 | 43.00 | 43.00 |
| Second agent | Conductive pigment | Zinc oxide grade #3 | 3.8 | 3.8 | 3.8 | 3.8 | 3.8 | 3.8 |
| | Extender pigment | Calcined kaolin Satintone W | 8.9 | 8.9 | 8.9 | 8.9 | 8.9 | 8.9 |
| | Aluminum phosphate-based component | LF Bowsei PM-303W | 12.0 | 12.0 | 12.0 | 12.0 | 12.0 | 12.0 |
| | Zinc powder | F-2000 | 32.3 | 32.3 | 32.3 | 32.3 | 32.3 | 32.3 |
| | | (Subtotal) | 57.00 | 57.00 | 57.00 | 57.00 | 57.00 | 57.00 |
| [Total] | | | 100.00 | 100.00 | 100.00 | 100.00 | 100.00 | 100.00 |
| Calculated value | PVC | | 81.2 | 82.3 | 82.8 | 81.9 | 81.6 | 80.7 |
| | Metallic zinc content (in coating film) mass% | | 51.3 | 51.6 | 52.2 | 51.4 | 51.4 | 51.2 |
| | Content (in coating material) mass% in terms of TiO₂ | | 0.14 | 0.27 | 0.41 | 0.44 | 0.23 | 0.00 |
| | Content (in first agent) mass% in terms of TiO₂ | | 0.32 | 0.64 | 0.96 | 1.03 | 0.53 | 0.00 |
| | Content parts by mass (based on 100 parts by mass of zinc powder) in terms of TiO₂ | | 0.4 | 0.8 | 1.3 | 1.4 | 0.7 | 0.0 |
| | Content parts by mass (based on 100 parts by mass of binder component excluding SiO₂) in terms of TiO₂ | | 12.5 | 27.5 | 25.4 | 43.8 | 21.7 | 0.0 |
| Evaluation | Storage stability | Water resistance after 2-day storage of first agent | 8 | 10 | 8 | 8 | 8 | 7 |
| | | Water resistance after 2-month storage of first agent | 8 | 9 | 8 | 8 | 8 | 4 |

### [Table 4]

**Table 4**

| | | | Example 2 | Example 4 | Comparative Example 1 |
|---|---|---|---|---|---|
| First agent | Deionized water | Demineralized Water | 20.81 | 19.25 | 19.94 |
| | Surface conditioner | TEGO Twin 4000 | 0.06 | 0.06 | 0.06 |
| | Triethanolamine titanium chelate | TYZOR TE | 2.00 | 0.00 | 0.00 |
| | Ammonium lactate titanium chelate | TYZOR LA | 0.00 | 3.26 | 0.00 |
| | Aqueous silica sol | Snowtex AK-L | 0.00 | 0.00 | 0.00 |
| | | SnowtexAK-YL | 8.05 | 8.17 | 9.20 |
| | Inorganic/organic hybrid water-based binder | Dynasylan SIVO 140 | 12.08 | 12.26 | 13.80 |
| | | (Subtotal) | 43.00 | 43.00 | 43.00 |
| Second agent | Conductive pigment | Zinc oxide grade #3 | 3.8 | 3.8 | 3.8 |
| | Extender pigment | Calcined kaolin Satintone W | 8.9 | 8.9 | 8.9 |
| | Aluminum phosphate-based component | LF Bowsei PM-303W | 12.0 | 12.0 | 12.0 |
| | Zinc powder | F-2000 | 32.3 | 32.3 | 32.3 |
| | | (Subtotal) | 57.00 | 57.00 | 57.00 |
| [Total] | | | 100.00 | 100.00 | 100.00 |
| Calculated value | PVC | | 82.3 | 81.9 | 80.7 |
| | Metallic zinc content (in coating film) mass% | | 51.6 | 51.4 | 51.2 |
| | Content (in coating material) mass% in terms of TiO₂ | | 0.27 | 0.44 | 0.00 |
| | Content (in first agent) mass% in terms of TiO₂ | | 0.64 | 1.03 | 0.00 |
| | Content parts by mass (based on 100 parts by mass of zinc powder) in terms of TiO₂ | | 0.8 | 1.4 | 0.0 |
| | Content parts by mass (based on 100 parts by mass of binder component excluding SiO₂) in terms of TiO₂ | | 27.5 | 43.8 | 0.0 |
| Evaluation | Salt spray anticorrosion properties | 500 hours | 10 | 10 | 9 |
| | | 1600 hours | 6 | 10 | 6 |
| | | 3600 hours | 5 | 8 | 5 |

## Claims

1. An anti-rust coating composition comprising:
(A1) silica nanoparticles;
(B) at least one zinc-based powder selected from zinc powder and zinc alloy powder;
(C) an aqueous titanium chelate compound; and
water.

2. The anti-rust coating composition according to claim 1, wherein the aqueous titanium chelate compound (C) is at least one selected from an organotitanium compound represented by formula: Ti(X)₄, where each X is independently a hydroxy group, an alkoxy group, or a chelating substituent, provided that at least one X is a chelating substituent, and an oligomer thereof.

3. The anti-rust coating composition according to claim 2, wherein the aqueous titanium chelate compound (C) is the organotitanium compound in which the chelating substituent is an alkanolamine-derived ligand, a hydroxycarboxylic acidderived ligand, or a hydroxycarboxylic acid salt-derived ligand.

4. The anti-rust coating composition according to claim 3, wherein the aqueous titanium chelate compound (C) is the organotitanium compound in which the chelating substituent is the alkanolamine-derived ligand.

5. The anti-rust coating composition according to claim 1, wherein a content of the aqueous titanium chelate compound (C) is 0.1 to 4.5 parts by mass based on 100 parts by mass of the zinc-based powder (B) in terms of TiO₂.

6. The anti-rust coating composition according to claim 1, further comprising (A2) at least one component selected from an alkoxysilane, a hydrolysate of an alkoxysilane, and a hydrolysis condensate of an alkoxysilane.

7. The anti-rust coating composition according to claim 1, wherein a content ratio of the zinc-based powder (B) is 80 mass% or less in a solid content of the anti-rust coating composition.

8. The anti-rust coating composition according to claim 1, having a pigment volume concentration (PVC) of 70% or more.

9. The anti-rust coating composition according to claim 1, which is a primary anti-rust coating composition.

10. An anti-rust coating composition kit comprising: a first agent; and a second agent, wherein
the first agent contains (A1) silica nanoparticles, (C) an aqueous titanium chelate compound, and water, and
the second agent contains (B) at least one zinc-based powder selected from zinc powder and zinc alloy powder.

11. The anti-rust coating composition kit according to claim 10, wherein the first agent further contains (A2) at least one component selected from an alkoxysilane, a hydrolysate of an alkoxysilane, and a hydrolysis condensate of an alkoxysilane.

12. An anti-rust coating film formed from the anti-rust coating composition according to any one of claims 1 to 8 or the anti-rust coating composition kit according to claim 10 or 11.

13. A primary anti-rust coating film formed from the anti-rust coating composition according to claim 9 or the anti-rust coating composition kit according to claim 10 or 11.

14. An anti-rust substrate comprising: a substrate; and the anti-rust coating film according to claim 12 formed on the substrate.

15. An anti-rust substrate comprising: a substrate; and the primary anti-rust coating film according to claim 13 formed on the substrate.

16. A method for producing an anti-rust substrate, the method comprising the steps of:
[1] applying, onto a substrate, the anti-rust coating composition according to any one of claims 1 to 9 or a mixture obtained by mixing the first agent and the second agent of the anti-rust coating composition kit according to claim 10 or 11; and
[2] curing the anti-rust coating composition or the mixture applied onto the substrate to form an anti-rust coating film on the substrate.
